# EUROPEAN PATENT APPLICATION

(11) **EP 2 000 201 A2**
(43) Date of publication of application: **10.12.2008**
(21) Application number: 07738055.8
(22) Date of filing: 08.03.2007
(51) Int. Cl.: B01J 23/56, B01D 53/94, B01J 23/89

(54) **CATALYST COMPOSITION**

(30) Priority: 30.03.2006 JP 2006095173
(71) Applicant: Daihatsu Motor Co., Ltd., Ikeda-shi, Osaka 563-8651 (JP); Cataler Corporation, Kakegawa-shi Shizuoka 437-1492 (JP)
(72) Inventor: TANAKA, Hirohisa, Gamo-gun Shiga 520-2593 (JP); TAN, Isao, Gamo-gun Shiga 520-2593 (JP); UENISHI, Mari, Gamo-gun Shiga 520-2593 (JP); TANIGUCHI, Masashi, Gamo-gun Shiga 520-2593 (JP); KIMURA, Mareo, Kakegawa-shi Shizuoka 437-1492 (JP); MATSUEDA, Satoshi, Kakegawa-shi Shizuoka 437-1492 (JP)
(74) Representative: Schwabe - Sandmair - Marx
(86) International application number: PCT/JP2007/054565
(87) International publication number: WO 2007/113981

(57) **Abstract**

Provided is a catalyst composition capable of preventing decrease in catalytic activity due to grain growth of noble metal under high temperature or under change in oxidation reduction or further for long term use, and of achieving excellent catalytic activity over a long time.
The catalyst composition containing a composite oxide represented by the following general formula (1):

AO·x(B_{2-y}C_{y}O_{3-α}) (1)

(wherein A represents an element selected from monovalent elements, divalent elements and lanthanides; B represents a trivalent element; and C represents a noble metal; x represents an integer of 1 to 6; y represents an atomic ratio satisfying the following relation: 0 < y < 2; and α represents a deficient atomic ratio of oxygen atoms) is prepared.

## Description

### TECHNICAL FIELD

The present invention relates to a catalyst composition used as a reaction catalyst for vapor or liquid phase.

### BACKGROUND ART

Exhaust gas discharged from internal combustion engines such as a vehicle contains hydrocarbons (HC), carbon monoxide (CO), nitrogen oxides (NOx) and the like, and three-way catalysts which purify these substances are known.
As such exhaust gas purifying catalysts, there have been proposed various catalyst compositions made of, for example, noble metals serving as active components, cerium oxides , zirconium oxides or perovskite-type composite oxides serving as supporting components.

For example, a three-way catalyst for exhaust gas purification which consists of noble metal component particles having a particle size of 1 to 20 nm and a coating of a promoter component covering the noble metal component particles, the promoter component being made of composite oxide having a spinel structure has been proposed (cf. for example, the following Patent Document 1).
Patent Document 1: Japanese Unexamined Patent Publication No. 2006-51431

### DISCLOSURE OF THE INVENTION

### PROBLEMS TO BE SOLVED

In the three-way catalyst for exhaust gas purification described in the aforementioned Patent Document 1, however, the composite oxide having the spinel structure only covers the noble metal component particles. Under high temperature or under change in oxidation reduction or further for long term use, the noble metal component particles move on the surface of the composite oxide having the spinel structure and coalesce to cause grain growth, which disadvantageously reduces effective surface areas of the noble metal component particles, resulting in a decrease in their catalytic activities.

An object of the present invention is to provide a catalyst composition capable of preventing decrease in catalytic activity due to grain growth of noble metal under high temperature or under change in oxidation reduction or further for long term use, and of achieving excellent catalytic activity over a long time.

### MEANS FOR SOLING THE PROBLEM

In order to attain the above described object, the catalyst composition of the present invention contains a composite oxide represented by the following general formula (1) :

AO·x(B_{2-y}C_{y}O_{3-α}) (1)

(wherein A represents an element selected from monovalent elements, divalent elements and lanthanides; B represents a trivalent element; and C represents a noble metal; x represents an integer of 1 to 6; y represents an atomic ratio satisfying the following relation: 0 < y < 2; and α represents a deficient atomic ratio of oxygen atoms).
Further, in the catalyst composition of the present invention, it is preferable that A is at least one element selected from the group consisting of Li, Na, K, Mg, Ca, Sr, Ba, Fe, La, Pr and Nd in the general formula (1).

Further, in the catalyst composition of the present invention, it is preferable that B is at least one element selected from the group consisting of Al, Ti, Mn, Fe, Co, Ni and Mo in the general formula (1).
Further, in the catalyst composition of the present invention, it is preferable that C is at least one noble metal selected from the group consisting of Rh, Pd and Pt in the general formula (1).

Further, in the catalyst composition of the present invention, it is preferable that x is 1 and/or 6 in the general formula (1).
Further, in the catalyst composition of the present invention, it is preferable that the composite oxide contains at least one type of crystal phase selected from the group consisting of a spinel type, a hexaaluminate type, a magnetoplumbite type and a β-alumina type crystal phase.

### EFFECT OF THE INVENTION

According to the catalyst composition of the present invention, since the solid solution-regeneration (self-regeneration) in which the noble metal is transformed into a solid solution in the composite oxide represented by the above formula (1) under an oxidizing atmosphere and precipitated from the same under a reducing atmosphere is efficiently repeated, a dispersion state of the noble metal in the composite oxide is satisfactorily maintained.
Therefore, deterioration in catalytic activity due to grain growth of noble metal can be prevented and high catalytic activity can be maintained over a long time. As a result, the catalyst composition of the present invention can be widely used as a reaction catalyst for vapor or liquid phase having noble metal as an active component.

### EMBODIMENT OF THE INVENTION

The catalyst composition of the present invention contains a composite oxide represented by the following general formula (1):

AO·x(B_{2-y}C_{y}O_{3-α}) (1)

(wherein A represents an element selected from monovalent elements, divalent elements and lanthanides; B represents a trivalent element; and C represents a noble metal. x represents an integer of 1 to 6; y represents an atomic ratio satisfying the following relation: 0 < y < 2; and α represents a deficient atomic ratio of oxygen atoms.
In the above general formula (1), examples of the monovalent element represented by A include alkali metals such as Li (lithium), Na (sodium), K (potassium), Rb (rubidium), Cs (cesium) and Fr (francium).

Further, examples of the divalent element represented by A include alkaline earth metals such as Be (beryllium), Mg (magnesium), Ca (calcium), Sr (strontium), Ba (barium) and Ra (radium); and divalent transition metals such as Fe(II) (divalent iron), Co(II) (divalent cobalt), Ni(II) (divalent nickel), Cu(II) (divalent copper) and Zn(II) (divalent zinc).

Further, examples of the lanthanide represented by A include La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium) and Lu (lutetium).

As the element represented by A, Li, Na, K, Mg, Ca, Sr, Ba, Fe(II), La, Pr and Nd are preferable, or K, Mg, Ca, Sr, Fe(II), La, Pr and Nd are more preferable.
These elements represented by A can be used alone or in combination of two or more kinds.

In the above general formula (1), examples of the trivalent element represented by B include Al(III) (trivalent aluminum); trivalent transition metals such as Ti(III) (trivalent titanium), Cr(III) (trivalent chromium), Mn(III) (trivalent manganese), Fe(III) (trivalent iron), Co (III) (trivalent cobalt), Ni(III) (trivalent nickel) and Mo(III) (trivalent molybdenum) ; and Ga(III) (trivalent gallium).

As the element represented by B, Al(III), Ti(III), Mn(III), Fe(III), Co(III), Ni(III) and Mo(III) are preferable, or Al(III), Ti(III), Fe(III) and Ni(III) are more preferable.
These elements represented by B can be used alone or in combination of two or more kinds.

In the above general formula (1), examples of the noble metal represented by C include Ru (ruthenium), Rh (rhodium), Pd (palladium), Ag (silver), Os (osmium), Ir (iridium) and Pt (platinum).
Rh, Pd and Pt are preferable, or Rh and Pt are more preferable.

These noble metals represented by C can be used alone or in combination of two or more kinds.
In the above general formula (1), x represents an integer of 1 to 6. For example, when x is 1, the composite oxide represented by the above general formula (1) has a spinel-type crystal phase, in which 1 mol of oxide represented by B_{2-y}C_{y}O_{3-α} is coordinated to 1 mol of oxide represented by AO.

For example, when x is 6, the composite oxide represented by the above general formula (1) has a hexaaluminate type, a magnetoplumbite-type or a β-alumina-type crystal phase, in which 6 mol of oxide (oxide in which the noble metal constitutes a solid solution) represented by B_{2-y}C_{y}O_{3-α}is coordinated to 1 mol of oxide represented by AO.
y represents an atomic ratio of C satisfying the following relation: 0 < y < 2. That is, C is an essential component, and y preferably represents an atomic ratio of C satisfying the following relation: 0.001 ≤ y ≤ 0.1. The atomic ratio of B satisfies the relation of 2-y, namely, a residual atomic ratio obtained by subtracting the atomic ratio of C from 2.

In the above general formula (1), α represents a deficient atomic ratio of oxygen atoms and is represented by 0 or a positive integer. More specifically, α represents a deficient atomic ratio of oxygen atoms caused by allowing the constituent atoms on the (B+C) site to be deficient to the theoretical constituent ratio of the oxide represented by B_{2-y}C_{y}O_{3-α} of (B+C):O = 2:3. In other words, α represents an oxygen deficient amount, which is a proportion of pores produced in the crystal structure of the composite oxide represented by the above general formula (1).

The composite oxide represented by the above general formula (1) includes a composition in which the noble metal is combined with CaAl₁₂O₁₉, BaAl₁₂O₁₉, BaFe₁₂O₁₉, SrFe₁₂O₁₉, KAl₁₁O₁₇, LaFe(2+)Fe(3+)₁₁O₁₉, MgTi₂O₄, MgFe₂O₄, FeAl₂O₄, MnAl₂O₄, MnFe₂O₄ or MgAl₂O₄, and examples thereof include MgAl_{1.993}Rh_{0.007}O₄, SrAl_{11.00}Fe_{0.95}Rh_{0.05}O₁₉, MgAl_{1.593}Fe_{0.400}Rh_{0.007}O₄, MgAl_{1.953}Fe_{0.040}Rh_{0.007}O₄, MgTiRhO₄ and PrAl₁₁RhO₁₈.

The composite oxide represented by the above general formula (1) can be produced according to any suitable method for preparing a composite oxide, such as coprecipitation method, citrate complex method and alkoxide method, without particular limitation.
In the coprecipitation method, for example, an aqueous mixed salt solution containing salts of the above-mentioned respective elements (excluding noble metal salts) in a predetermined stoichiometric ratio is prepared. The aqueous mixed salt solution is coprecipitated by addition of a neutralizing agent, and the resulting coprecipitate is dried and subjected to a heat treatment.

Examples of the salts of the respective elements include inorganic salts such as sulfates, nitrates, chlorides and phosphates; and organic salts such as acetate and oxalates. The aqueous mixed salt solution can be prepared, for example, by adding the salts of the respective elements to water so as to establish the predetermined stoichiometric ratio and mixing them with stirring.
Then, the aqueous mixed salt solution is coprecipitated by adding the neutralizing agent thereto. Examples of the neutralizing agent include ammonia; organic bases including amines such as triethylamine and pyridine; and inorganic bases such as sodium hydroxide, potassium hydroxide, sodium carbonate, potassium carbonate and ammonium carbonate. The neutralizing agent is added so that the solution after the addition of the neutralizing agent has a pH of about 6 to 10.

The resulting coprecipitate is washed with water, if necessary, dried by vacuum drying or forced-air drying, for example, and then subjected to a heat treatment (primary baking), for example, at a temperature of 500 to 1000°C, or preferably at a temperature of 600 to 950°C to give a primary composite oxide.
Subsequently, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably at a temperature of 800 to 1200°C to give a composite oxide represented by the above general formula (1).

Examples of the noble metal salt include the same salts as those described above and can be prepared in the same manner as above. Practically, aqueous nitrate solution, dinitrodiammine nitrate solution and aqueous chloride solution are used. Specific examples of a rhodium salt solution include rhodium nitrate solution and rhodium chloride solution. Specific examples of a palladium salt solution include aqueous palladium nitrate solution, dinitrodiammine palladium nitrate solution and palladium tetraammine nitrate solution. Specific examples of a platinum salt solution include dinitrodiammine platinum nitrate solution, chloroplatinic acid solution, and platinum tetraammine solution.

In the above method, an aqueous solution (containing noble metal(s)) of all the constituent elements is prepared. The aqueous solution thus prepared is coprecipitated by addition of a neutralizing agent, and the resulting coprecipitate is dried and subjected to a heat treatment.
In the citrate complex method, for example, an aqueous citric acid mixed salt solution is prepared by adding citric acid and the salts of the respective elements (excluding noble metal salts) to an aqueous solution so that an amount of the citric acid slightly exceeds an amount of the salts thereof (excluding noble metal salts) corresponding to the stoichiometric ratio with respect to the above-mentioned respective elements. The aqueous citric acid mixed salt solution is evaporated to dryness to form citrate complex of the above-mentioned respective elements (excluding noble metal salts). The resulting citrate complex is provisionally baked and then subjected to a heat treatment.

Examples of the salts of the respective elements include the same salts as described above, and the aqueous citric acid mixed salt solution can be prepared, for example, by preparing an aqueous mixed salt solution in the same manner as above and then adding an aqueous solution of citric acid to the aqueous mixed salt solution.
Thereafter, the aqueous citric acid mixed salt solution is evaporated to dryness to form citrate complex of the above-mentioned respective elements. The evaporation to dryness is carried out to remove moisture at a temperature at which the formed citrate complex is not decomposed, for example, at room temperature to about 150°C. Thus, the citrate complex of the above-mentioned respective elements (excluding noble metal salts) can be formed.

The formed citrate complex is provisionally baked and subjected to a heat treatment. The provisional baking is carried out by heating at a temperature of 250 to 350°C, for example, in vacuum or in an inert atmosphere. The provisional baked citrate complex is then subjected to a heat treatment (primary baking), for example, at a temperature of 500 to 1200°C, or preferably 600 to 1000°C to give a primary composite oxide.
Subsequently, in the same manner as the coprecipitation method, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably at a temperature of 800 to 1200°C to give a composite oxide represented by the above general formula (1).

In the alkoxide method, an alkoxide mixed solution containing alkoxides of the respective elements (excluding noble metals) in the above-mentioned stoichiometric ratio is prepared. The alkoxide mixed solution is hydrolyzed by adding water thereto, to give a precipitate.
Examples of the alkoxides of the respective elements include mono-, di-, or tri-alcoholates each comprising the respective elements and an alkoxy such as methoxy, ethoxy, propoxy, isopropoxy or butoxy; and mono-, di-, or tri-alkoxyalcoholates of the respective elements represented by the following general formula (2).

E[OCH(R₁)-(CH₂)ᵢ-OR₂]ⱼ (2)

(wherein E represents each of the elements, R1 represents a hydrogen atom or an alkyl group having 1 to 4 carbon atoms, R2 represents an alkyl group having 1 to 4 carbon atoms, i represents an integer of 1 to 3, and j represents an integer of 2 to 4).
More specific examples of the alkoxyalcoholates include methoxyethylate, methoxypropylate, methoxybutylate, ethoxyethylate, ethoxypropylate, propoxyethylate and butoxyethylate.

The alkoxide mixed solution can be prepared, for example, by adding the alkoxides of the respective elements to an organic solvent in such proportions so as to establish the above-mentioned stoichiometric ratio and mixing them with stirring.
The organic solvent is not particularly limited as long as it can dissolve the alkoxides of the respective elements, and examples thereof include aromatic hydrocarbons, aliphatic hydrocarbons, alcohols, ketones and esters. Among them, aromatic hydrocarbons such as benzene, toluene and xylene are preferable.

The resulting precipitate is evaporated to dryness and the dried precipitate is then dried, for example, by vacuum drying or forced-air drying, and is thereafter subjected to a heat treatment (primary baking), for example, at a temperature of 500 to 1000°C, or preferably at a temperature of 600 to 950°C to give a primary composite oxide.
Subsequently, in the same manner as the coprecipitation method, an aqueous noble metal salt solution is added to the resulting primary composite oxide to prepare a precursor composition. The resulting precursor composition is dried by, for example, vacuum drying or forced-air drying, and thereafter, subjected to a heat treatment (secondary baking), for example, at a temperature of 500 to 1400°C, or preferably at a temperature of 800 to 1200°C to give a composite oxide represented by the above general formula (1).

The composite oxide represented by the above general formula (1) thus obtained can be used intact as a catalyst composition, but is generally prepared as a catalyst composition by a known method such as being supported on a catalyst carrier.
The catalyst carrier is not particularly limited and examples thereof include known catalyst carriers such as honeycomb monolith carriers made of cordierites.

The composite oxide is supported on the catalyst carrier, for example, first by adding water to the composite oxide represented by the above general formula (1) to form a slurry, then applying the slurry to the catalyst carrier, drying the applied slurry, and thereafter subjecting it to a heat treatment at a temperature of 300 to 800°C, or preferably 300 to 600°C.
In the thus obtained catalyst composition of the present invention, the noble metal is coordinated in a crystal structure of the composite oxide represented by the above general formula (1), and the coordinated noble metal is precipitated from the crystal structure under a reducing atmosphere, or transformed into a solid solution in the crystal structure under an oxidizing atmosphere.

Thus, in the catalyst composition of the present invention, by a self-regenerative function capable of repeating formation of solid solution under an oxidizing atmosphere and precipitation under a reducing atmosphere, grain growth of noble metal is effectively suppressed and a dispersion state thereof in the composite oxide can be maintained even in long term use. As a result, high catalytic activity can be maintained over a long time even if the used amount of the noble metal is remarkably decreased.

Therefore, the catalyst composition of the present invention can be widely used as a reaction catalyst for vapor or liquid phase. In particular, the catalyst composition can realize excellent exhaust gas purifying properties over a long time, and therefore, the catalyst composition can be suitably used as an exhaust gas purifying catalyst which is used for purifying exhaust gas discharged from internal combustion engines such as gasoline engine and diesel engine, and boilers.

### EXAMPLES

While in the following, the present invention is described in further detail with reference to Examples and Comparative Example, the present invention is not limited to any of them by no means.

### Example 1

| | |
|---|---|
| Magnesium nitrate | 0.1000 mol in terms of Mg |
| Aluminium nitrate | 0.1993 mol in terms of Al |

An aqueous mixed salt solution was prepared by charging the above components in a 500-mL round-bottomed flask, adding 100 mL of deionized water thereto, and dissolving the mixture with stirring. Next, the aqueous mixed solution thus prepared was gradually added dropwise to an aqueous alkaline solution (neutralizing agent) which was prepared by dissolving 25.0 g of sodium carbonate in 200g of deionized water, to give a coprecipitate. After the coprecipitate was washed with water and then filtered, vacuum drying was performed at 80°C. Subsequently, the resulting product was subjected to a heat treatment (primary baking) at 800°C for 1 hour, to give a primary composite oxide.

An aqueous rhodium nitrate solution (equivalent to 0.0007 mol of Rh) was added to the primary composite oxide, mixed with stirring and impregnated for 1 hour, to give a precursor composition.
The precursor composition was dried at 100°C for 2 hours, and then subjected to a heat treatment (secondary baking) at 1000°C for 1 hour, to give a powder of a heat-resistant oxide having a structure of MgAl_{1.993}Rh_{0.007}O₄.

### Example 2

| | |
|---|---|
| Dimethoxystrontium | 0.100 mol in terms of Sr |
| Trimethoxy aluminium | 1.100 mol in terms of Al |
| Trimethoxy iron | 0.095 mol in terms of Fe |

An alkoxide mixed solution was prepared by charging the above components in a 500-mL round-bottomed flask, adding 200 mL of toluene thereto, and dissolving the mixture with stirring. Next, the alkoxide mixed solution was added dropwise in 600 mL of deionized water for about 10 minutes to be hydrolyzed. The toluene and the deionized water were distilled off and evaporated to dryness from the hydrolyzed solution. The resulting product was subjected to forced-air drying at 60°C for 24 hours, and thereafter, subjected to a heat treatment at 800°C for 1 hour (primary baking), to give a primary composite oxide.

An aqueous rhodium nitrate solution (equivalent to 0.005 mol of Rh) was added to the primary composite oxide, mixed with stirring and impregnated for 1 hour, to give a precursor composition.
The precursor composition was dried at 100°C for 2 hours, and then subjected to a heat treatment (secondary baking) at 1000°C for 2 hours, to give a powder of a heat-resistant oxide having a structure of SrAl_{11.00}Fe_{0.95}Rh_{0.05}O₁₉.

### Example 3

| | |
|---|---|
| Magnesium nitrate | 0.1000 mol in terms of Mg |
| Aluminium nitrate | 0.1593 mol in terms of Al |
| Iron nitrate | 0.0400 mol in terms of Fe |

An aqueous mixed salt solution was prepared by charging the above components in a 500-mL round-bottomed flask, adding 100 mL of deionized water thereto, and dissolving the mixture with stirring. Next, the aqueous mixed solution thus prepared was gradually added dropwise to an aqueous alkaline solution (neutralizing agent) which was prepared by dissolving 25.0 g of sodium carbonate in 200g of deionized water, to give a coprecipitate. After the coprecipitate was washed with water and then filtered, vacuum drying was performed at 80°C. Subsequently, the resulting product was subjected to a heat treatment (primary baking) at 800°C for 1 hour, to give a primary composite oxide.

An aqueous rhodium nitrate solution (equivalent to 0.0007 mol of Rh) was added to the primary composite oxide, mixed with stirring and impregnated for 1 hour, to give a precursor composition.
The precursor composition was dried at 100°C for 2 hours, and then subjected to a heat treatment (secondary baking) at 1000°C for 1 hour, to give a powder of a heat-resistant oxide having a structure of MgAl_{1.593}Fe_{0.400}Rh_{0.007}O₄.

### Example 4

| | |
|---|---|
| Magnesium nitrate | 0.1000 mol in terms of Mg |
| Aluminium nitrate | 0.1953 mol in terms of Al |
| Iron nitrate | 0.0040 mol in terms of Fe |

An aqueous mixed salt solution was prepared by charging the above components in a 500-mL round-bottomed flask, adding 100 mL of deionized water thereto, and dissolving the mixture with stirring. Next, the aqueous mixed solution thus prepared was gradually added dropwise to an aqueous alkaline solution (neutralizing agent) which was prepared by dissolving 25.0 g of sodium carbonate in 200g of deionized water, to give a coprecipitate. After the coprecipitate was washed with water and then filtered, vacuum drying was performed at 80°C. Subsequently, the resulting product was subjected to a heat treatment (primary baking) at 800°C for 1 hour, to give a primary composite oxide.

An aqueous rhodium nitrate solution (equivalent to 0.0007 mol of Rh) was added to the primary composite oxide, mixed with stirring and impregnated for 1 hour, to give a precursor composition.
The precursor composition was dried at 100°C for 2 hours, and was then subjected to a heat treatment (secondary baking) at 1000°C for 1 hour, to give a powder of a heat-resistant oxide having a structure of MgAl_{1.953}Fe_{0.040}Rh_{0.007}O₄.

### Comparative Example 1

An amount 150 g of a commercially available α-Al₂O₃ (specific surface area: 13.2 m²/g) was impregnated with Rh using 9.1 g (equivalent to 0.41 g in terms of Rh) of an aqueous rhodium nitrate solution (Rh: 4.48% by weight), subjected to forced-air drying at 60°C for 24 hours and subjected to a heat treatment at 500°C in the atmosphere for 1 hour using an electric furnace, to give a powder of Rh-supporting α-Al₂O₃ (Rh/Al₂O₃ (α)). The amount of Rh supported on α-Al₂O₃ was 2.00% by weight.

### Test Example 1 (Measurement of Rate of Solid Solution)

Each of the powders (oxides) obtained in Examples and Comparative Example was subjected to an oxidation treatment (in the atmosphere at 800°C for 1 hour), then a reduction treatment (CO: 7.5%, H₂: 2.5%, N₂: balance at 800°C for 1 hour), and furthermore, a reoxidation treatment (in the atmosphere at 800°C for 1 hour: in this case, Example 2 was not performed).

After each of the treatments, the respective powders were dissolved in a 7 wt% hydrofluoric acid aqueous solution and allowed to stand at room temperature for 20 hours, and each solution was filtered through a filter having a pore size of 0.1 µmø.
The amount of Rh dissolved in the filtrate was quantitatively analyzed by inductively coupled plasma (ICP) emission spectrometry. A rate of solid solution of Rh to the oxide was calculated based on the results. Further, an amount of Rh precipitated was calculated from a difference between the amount of a solid solution after an oxidation treatment and the amount of a solid solution after a reduction treatment. The results are shown in Table 1.

In the above method, the residue of a fluoride was produced during the dissolution of each powder in a 7 wt% hydro fluoric acid aqueous solution. However, since the Rh constituting a solid solution in a crystal structure of the oxide was dissolved, the proportion of the Rh constituting a solid solution in the crystal structure of the oxide was able to be obtained by measuring the concentration of the Rh in the solution.
Table 1 revealed that each of the powders obtained in Examples were transformed into a solid solution under an oxidizing atmosphere and were precipitated under a reducing atmosphere.

### Test Example 2 (NO 30% Purifying Temperature)

### 1) Endurance Test

One cycle was set as follows: exposure to an inert atmosphere for 5 minutes, exposure to an oxidizing atmosphere for 10 minutes, exposure to an inert atmosphere for 5 minutes and exposure to a reducing atmosphere for 10 minutes (30 minutes in total), and this cycle was repeated 20 times for 10 hours in total. In accordance with the above test, each of the powders obtained in Examples 1 and 2 and Comparative Example 1 was alternately exposed to an oxidizing atmosphere and a reducing atmosphere, and then cooled to room temperature while maintaining in the reducing atmosphere.

The inert atmosphere, the oxidizing atmosphere and the reducing atmosphere correspond to an exhaust gas atmosphere discharged when burning a mixed air in the stoichiometric state, the lean state, and the rich state, respectively.
Each atmosphere was prepared by feeding a gas with the composition shown in Table 2, which contains high temperature steam, at a flow rate of 300 x 10⁻³ m³/hr. The atmospheric temperature was maintained at about 1000°C.

### 2) NO 30% Purifying Temperature

While a gas (He balance) containing 4% NO and 6% H₂ was allowed to flow at a flow rate of 50 mL/min in total, 40 mg of each powder subjected to the above endurance test was heated from room temperature to 400°C at a rate of 3°C/min. During the heating, a signal of NO (mass: 30) was observed by mass spectrometry. The temperature, at which the number of counts decreased by 30% as compared with that at room temperature, was taken as a NO 30% purifying temperature. The results are shown in Table 1.

### Test Example 3 (Purifying Rate at 430°C)

Each of the powders obtained in Examples 1, 3 and 4 and Comparative Example 1 was subjected to a reduction treatment (CO: 7.5%, H₂: 2.5%, N₂: balance, at 800°C for 1 hour) and was molded into a pellet having a size in the range of 0.5 to 1.0 mm, to prepare a specimen.
Each of the purifying rates of CO, HC, and NOx at 430°C was measured using the model gas composition shown in Table 3. In the measurement, the sample weighed 0.5 g and the flow rate was taken as 2.25 L/min. The results are shown in Table 1.

[Table 1]

**[TABLE 1]**

| Ex./ Comp. Ex. | Composition | Amount of Rh Contained (Supported) (wt%) | Amount of Solid Solution of Rh (%) | | | Amount of Rh Precipitated (Oxidation-Reduction) | NO 30% Purifying Temperature (°C) | 430°CPurifying Rate (%) | | |
|---|---|---|---|---|---|---|---|---|---|---|
| | | | Oxidation | Redaction | Reoxidation | | | CO | HC | NOx |
| Ex. 1 | MgAl_{1.993}Rh_{0.007}O₄ | 0.50 | 66 | 15 | 56 | 51 | 265.0 | 61.1 | 82.2 | 92.1 |
| Ex. 2 | SrAl₁₁Fe_{0.95}Rh_{0.05}O₁₉ | 0.69 | 80 | 25 | - | 55 | 270.0 | - | - | - |
| Ex. 3 | MgAl_{1.593}Fe_{0.400}Rh_{0.007}O₄ | 0.47 | 88 | 18 | 69 | 70 | - | 72.3 | 77.6 | 98.1 |
| Ex. 4 | MgAl_{1.953}Fe_{0.400}Rh_{0.007}O₄ | 0.50 | 90 | 4 | 76 | 86 | - | 67.8 | 81.9 | 96.6 |
| Comp. Ex. 1 | Rh/Al₂O₃(α) | 2.00 | 0 | 0 | 0 | 0 | 353.0 | 47.0 | 63.8 | 70.9 |

[Table 2]

**[TABLE 2]**

| | Oxidizing Atmosphere (vol%) | Inert Atmosphere (vol%) | Reducing Atmosphere (vol%) |
|---|---|---|---|
| H₂ | - | - | 0.5 |
| CO | - | - | 1.5 |
| O₂ | 1.0 | - | - |
| CO₂ | 8.0 | 8.0 | 8.0 |
| H₂O | 10 | 10 | 10 |
| N₂ | 81 | 82 | 80 |

[Table 3]

**[TABLE 3]**

| Gas | CO | H₂ | C₃H₆ | C₃H₈ | O₂ | NOx | CO₂ |
|---|---|---|---|---|---|---|---|
| Concentration (ppm) | 7000 | 2333 | 500 | 133 | 6700 | 1700 | 80000 |

While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

The catalyst composition of the present invention can be widely used as a reaction catalyst for vapor or liquid phase, and can be suitably used as an exhaust gas purifying catalyst which is used for purifying exhaust gas discharged from internal combustion engines such as gasoline engine and diesel engine, and boilers.

## Claims

1. A catalyst composition comprising a composite oxide represented by the following general formula (1):
AO·x(B_{2-y}C_{y}O_{3-α}) (1)
wherein A represents an element selected from monovalent elements, divalent elements and lanthanides; B represents a trivalent element; and C represents a noble metal; x represents an integer of 1 to 6; y represents an atomic ratio satisfying the following relation: 0 < y < 2; and α represents a deficient atomic ratio of oxygen atoms.

2. The catalyst composition according to claim 1, wherein A is at least one element selected from the group consisting of Li, Na, K, Mg, Ca, Sr, Ba, Fe, La, Pr and Nd in the general formula (1).

3. The catalyst composition according to either claim 1 or 2, wherein B is at least one element selected from the group consisting of Al, Ti, Mn, Fe, Co, Ni and Mo in the general formula (1).

4. The catalyst composition according to any one of the claims 1 to 3, wherein C is at least one noble metal selected from the group consisting of Rh, Pd and Pt in the general formula (1).

5. The catalyst composition according to any one of claims 1 to 4, wherein x is 1 and/or 6 in the general formula (1).

6. The catalyst composition according to any one of claims 1 to 5, wherein the composite oxide comprises at least one type of crystal phase selected from the group consisting of a spinel type, a hexaaluminate type, a magnetoplumbite type and a β-alumina type crystal phase.
